# EUROPEAN PATENT SPECIFICATION

(11) **EP 3 165 258 B1**
(45) Date of publication and mention of the grant of the patent: **29.11.2017**
(21) Application number: 16197840.8
(22) Date of filing: 08.11.2016
(51) Int. Cl.: A62B 17/00, D03D 1/00, A41D 31/00

(54) **FLAME-RESISTANT PROTECTIVE CLOTHING**
FEUERBESTÄNDIGE SCHUTZBEKLEIDUNG
VÊTEMENTS DE PROTECTION IGNIFUGÉS

(30) Priority: 09.11.2015 BE 201505731
(43) Date of publication of application: 10.05.2017
(73) Proprietor: Sioen NV, 8850 Ardooie (BE)
(72) Inventor: DE GLAS, Vera, 8570 Vichte (BE)
(74) Representative: Gevers Patents

(56) References cited:
- US-A- 5 933 865
- US-A1- 2004 266 293
- US-A1- 2013 174 334
- US-A1- 2014 259 328

## Description

The present invention relates to flame-resistant protective clothing, comprising, in the direction from the outside to the inside of the clothing, a flame-resistant, abrasion-resistant outer layer, a breathable, water impermeable film, and a flame-resistant thermal barrier. The flame-resistant thermal barrier contains a fabric which is locally doubled to form air pockets between two fabric parts. The fabric has a first, substantially flat side and a second side that is provided with a relief formed by said air pockets.

The protective clothing is, in particular, intended for fire fighters, and thus is required to meet certain standards, particularly the European standard EN 469:2005. The parameters which, according to this standard, should be met are its heat transfer (by flame or by thermal radiation), its resistance to water penetration and its resistance to water vapour. For each of these parameters, two levels are provided which are respectively indicated by Xf1 or Xf2, Xr1 or Xr2, Y1 or Y2 and Z1 or Z2.

Currently, apart from the water vapour permeability (Ret value), no standards are provided in de European standard for indicating the physiological/thermal stress caused by the fire fighting clothing. However, these parameters, too, are of significant importance. In the current European standard, the standard for these parameters is stated to be under development.

Fire fighter clothing exhibiting the characteristics described above has been disclosed in, e.g., US 2013/0174334. The object of the invention described in this American patent application is to provide a layered, heat-resistant protective clothing that offers the necessary protection from fire, yet is sufficiently light to prevent heat stress. To this end, a double fabric is used as an outer layer which increases in thickness at a temperature of 400°C as a result of a difference in thermal shrinkage between the front and rear fabric. The drawback of such an outer layer is that the fire fighter is already subjected to high temperatures before the additional insulation in his protective clothing is activated. Furthermore, in US 2013/0174334, a fabric is used as a lining that contains air channels and thus provides an additional thermal insulation. The water-impermeability of this clothing is provided by a woven or knit intermediate layer, onto which a breathable, water impermeable film of polytetrafluoroethylene (PTFE) or the like is laminated or coated.

The invention now aims to provide a novel protective clothing which allows a further weight reduction to be realised for a given thermal insulation value.

For this purpose, the flame-resistant protective clothing according to the present invention is characterized in that the breathable, water impermeable film is attached to the flat side of said fabric, said flat side facing the outside of the protective clothing.

In practice, a breathable, water impermeable film should always be laminated or coated onto a substrate. In the protective clothing described in US 2013/0174334, this is achieved by laminating a PTFE film, the weight of which, including the weight of the adhesive layer, is usually in the order of about 40 g/m², onto a fabric, thus creating, in example 1 of this American patent application, a moisture barrier having a total weight of 120 g/m². According to the invention, it has now been found that significant weight savings can be achieved by not coating or laminating the water impermeable film onto a separate substrate, but rather onto the thermal barrier itself. In this manner, the barrier thus obtained performs two functions at once: that of a thermal barrier and that of a moisture barrier. The fabric that is used in US 2013/0174334 as a substrate for the breathable, water impermeable film, offers virtually no additional thermal insulation by itself, and can therefore simply be omitted while maintaining the thermal insulation of the clothing.

Preferably, the fabric to which the water impermeable film is attached is woven as a single piece.

The advantage of this is that no adhesive is needed to, e.g., attach two fabric parts to each other, which would negatively impact the breathability of the whole.

In a preferred embodiment of the protective clothing according to the invention, a further flame-resistant thermal barrier is provided between said outer layer and said film, in particular comprising a knitted fabric.

This additional thermal barrier reduces the heat transfer through the clothing by flame and by thermal radiation, so that the heat transfer level as determined according to EN 469:2005 can easily be raised from level 1 to level 2 (from Xf1 to Xf2 and from Xr1 to Xr2). The knitted fabric which is preferably used for his purpose, only needs to have a relatively low weight of, e.g., about 80 to 100 g/m², i.e. about the weight saved in comparison to US 2013/0174334 by attaching the water impermeable film to the thermal barrier rather than to a separate substrate. The advantage of a knitted fabric compared to, e.g., a non-woven material is not only that it can be implemented in a lightweight manner, but also that it may be washed regularly without wear or damage.

In a further preferred embodiment of the protective clothing according to the invention, the clothing is made up of an inner garment, which is provided with a fastening to enable it to be put on and taken off, and of an outer garment, which is attached to the inner garment for being worn together with the inner garment, wherein said outer garment comprises said outer layer, said film and said thermal barrier, wherein the outer garment is releasably attached to the inner garment by means of attachment means provided allowing the outer garment to be released from the inner garment without needing to release said fastening of the inner garment.

The protective clothing according to this preferred embodiment is intended to reduce contamination of the body by contact with harmful agents, particularly carcinogenic agents, such as polyaromatic hydrocarbons and volatile organic compounds. In fact, evidence indicates that fire fighters, on average, have a lower life expectancy. The harmful agents can enter the body by inhalation as well as through the skin.

Tests have shown that these harmful agents can pass through the outer layers of protective clothing relatively easily and for the most part accumulate in the breathable, water impermeable film.

To reduce contamination of the body, the Viking firm offers a fire fighter suit of which the outer layer can be removed without the need for the inner garment itself to be taken off or even undone. The outer garment, formed by the outer layer, should then be placed into a dissolvable laundry bag in which it can be taken to the laundry machine without causing further contamination.

Such a protective clothing is also known from WO 96/39056. In this known protective clothing, the outer layer forms an outer garment that can be worn separately. The inner garment, which can also be worn separately, comprises a further outer layer which is abrasion-resistant is, a thermal barrier and a breathable, water impermeable film that may be laminated onto a flat fabric serving as lining.

A disadvantage of this type of protective clothing is that the problem of contamination during and after the outer garment being taken off has not been solved. As indicated above, the toxic agents accumulate mostly in the breathable, water impermeable film, so that the fire fighter, as well as the vehicle transporting him back to the fire station, are still being contaminated by toxic agents originating from the inner garment. A further major disadvantage is that, as both the inner garment and the outer garment need to comprise an abrasion-resistant outer layer, the total layer structure of the protective clothing becomes so heavy that it significantly increases the risk of physiological/heat stress, or, in other words, the risk of the fire fighter suffering a heart attack after an intervention. Depending on the thickness of the thermal barrier, and thus on the intended heat transfer properties, the weight of such a layer structure easily reaches over 700 g/m².

As the protective clothing according to the present invention does not require a substrate that contributes virtually nothing to the thermal insulation of the clothing, the total weight of the clothing, depending on the weight of the textile materials used, can easily be limited to 590 to 670 g/m² without the additional thermal barrier between the water impermeable film and the outer layer, and to 670 to 770 g/m² with an additional thermal barrier to achieve a heat transfer level 2 (Xf2 and Xr2).

A further advantage of this preferred embodiment is that the greater part of the toxic agents are removed when the outer garment is take off, because the outer garment contains the breathable, water impermeable film in which most of the toxic agents are received, and which, contrary to the other layers, forms an effective barrier to these toxic agents.

In an advantageous embodiment of the protective clothing according to the present invention, the inner garment is formed by a flame-resistant, abrasion-resistant fabric. This fabric is preferably woven so densely that it has a permeability to air, measured according to DIN EN ISO 9237 at a pressure of 100 Pa, which is lower than 150 l/m².sec, and preferably lower than 100 l/m².sec. Furthermore, it preferably has a weight which is higher than 165 g/m², preferably higher than 175 g/m² and more preferably higher than 185 g/m², wherein the weight of said abrasion-resistant fabric is preferably lower than 230 g/m².

The abrasion-resistant fabric, i.e. the inner garment, of this embodiment can be washed frequently without wearing quickly. Its low permeability to air further affords it a certain protection against contamination without the need for it to contain a dense film itself. The preferred weights allow the desired abrasion-resistance and permeability to air to be achieved without the weight of the inner garment adding too much to the total weight of the protective clothing.

Further advantages and characteristics of the invention will become apparent from the following description of a number of preferred embodiments of protective clothing according to the invention. However, the following description is merely illustrative and is not intended to limit the scope of the invention as determined by the claims. The reference numbers indicated in the description refer to the accompanying drawings, in which:
Figure 1 shows a schematic view of a layer structure for protective clothing according to the invention, with an outer layer and a thermal barrier onto which a breathable, water impermeable film has been laminated;
Figure 2 shows a similar layer structure as shown in figure 1, with an additional thermal barrier between the outer layer and the water impermeable film;
Figure 3 shows a similar layer structure as shown in figure 1, additionally provided with a flame-resistant, abrasion-resistant fabric forming an inner garment inside the outer garment with the layer structure according to figure 1;
Figure 4 shows a similar layer structure as shown in figure 3, having an additional thermal barrier in the outer garment between the outer layer and the water impermeable film;
Figure 5 shows a perspective view of a jacket of protective clothing according to a preferred embodiment of the invention, composed of an inner jacket and an outer jacket;
Figure 6 shows a larger scale view of the collar of the jacket according to figure 5, said collar being composed of an inner collar and an outer collar;
Figure 7 shows the collar according to figure 6, wherein the outer collar has been folded up;
Figure 8 shows a perspective view of the inner jacket;
Figure 9 shows a larger scale view of the quick-release zipper on the inside of the inner jacket;
Figure 10 shows a perspective view of the outer jacket;
Figure 11 shows a perspective view of a pair of trousers of protective clothing according to a preferred embodiment of the invention, to be worn in combination with the jacket shown in figures 5 to 9, which is composed of an inner pair of trousers and an outer pair of trousers;
Figure 12 shows a perspective view of the inner pair of trousers;
Figure 13 shows a perspective view of the outer pair of trousers; and
Figure 14 shows a perspective view analogous to that of figure 11, wherein the outer pair of trousers has been disconnected from the inner pair of trousers.

The invention in general relates to a flame-resistant protective clothing. The term "flame-resistant" is intended to mean, in particular, that the flame directed to the inside or the outside of the clothing or of the material which is flame-resistant, is not propagated by the clothing or by said material. Preferably, a flame propagation index of 3 is achieved, measured according to the European standard EN ISO 15025:2002, procedure A.

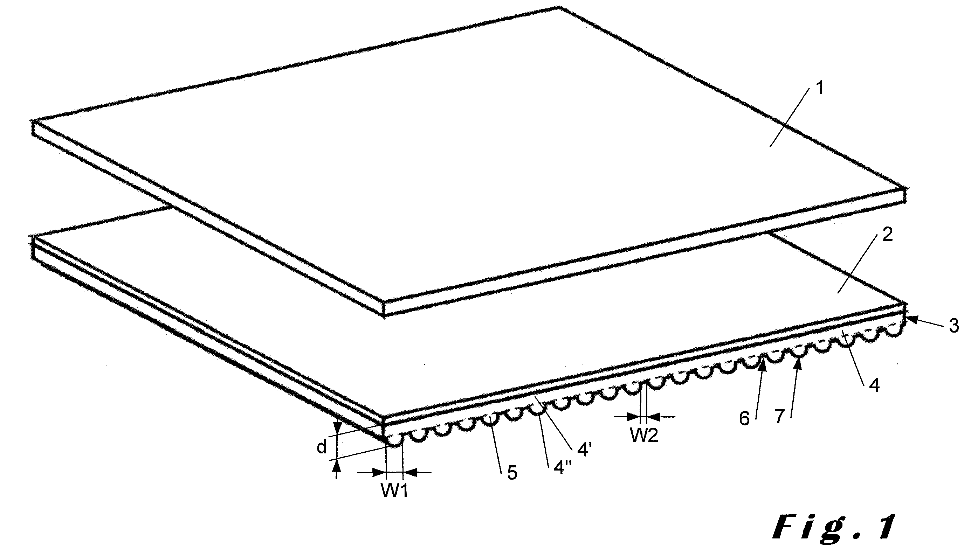

The protective clothing contains at least, from the outside to the inside, a flame-resistant, abrasion-resistant outer layer 1, a breathable, water impermeable film 2 and a flame-resistant thermal barrier 3. This minimal layer structure is shown in figure 1.

The abrasion-resistant outer layer 1 ensures that the clothing does not wear too quickly due to use or washing. The abrasion or wear resistance of textile materials is measured with an abrasion test device, also known as a Martindale tester. Herein, the textile material is rubbed against a standard abrasive at a predetermined pressure and according to a continuous variable movement. The standard abrasive material is a wool fabric. The pressure is selected depending on the application and/or the requirements of the final article, being either 9 kPa or 12 kPa. The result is expressed as the number of cycles of resistance, wherein, in the textile industry of personal protective clothing, the end point of the test is usually taken to be the rupture of two threads. In the present description, the term "an abrasion resistant layer" is intended to mean, in particular, a layer which resists for at least 50 000 cycles at a pressure of 12 kPa (until two threads are broken).

The breathable, water impermeable film 2 ensures that no water penetrates through the protective clothing, while still allowing water vapour to escape through the protective clothing. As determined by EN 469:2005, the resistance to water penetration, tested according to EN 20811 with a pressure increase rate of 0.98 kPa/min, should be at least 20 kPa (= level 2) due to the presence of the water impermeable film 2. On the other hand, the resistance to water vapour, measured according to EN 31092, should, according to EN 469:2005, be at least below 45 m²Pa/W (= level 1) or below or equal to 30 m²Pa/W (= level 2). Accordingly, in the present description, the term "a breathable, water impermeable film 2" is intended to mean, in particular, a film which insures that the resistance to water penetration of the protective clothing fulfils level 2 according to EN469:2005, and the resistance against water vapour penetration fulfils level 2 according to EN 469:2005.

According to the invention, the breathable, water impermeable film 2 is first attached to the thermal barrier 3. The attachment between these two can be carried out by laminating the film 2 and the thermal barrier 3 or by coating the film 2 onto the thermal barrier. For the laminating, it is preferable to use an adhesive that is applied only locally, particularly point-wise, so as to affect the permeability to water vapour of the thermal moisture barrier only minimally. The coating of the film 2 onto the thermal barrier 3 can be carried out by means of various coating techniques, wherein an indirect coating technique or, in other words, a transfer coating technique is preferred. According to the invention, the thermal barrier 3 to which de film 2 is attached comprises a fabric 4 which is locally doubled to form air pockets 5 between two fabric parts 4', 4". The fabric 4 has a first, substantially flat side facing the outside of the protective clothing, and a second, opposite side, which is provided with a relief formed by the air pockets 5 in the fabric 4. The breathable, water impermeable film 2 is attached to the flat side of the fabric 4.

The fabric 4 is preferably woven as a single piece. The two fabric parts 4', 4" are, in other words, not woven separately and then attached to each other, but are manufactured by means of a double weaving technique. This ensures that the permeability to water vapour of said fabric is maximally maintained.

As shown schematically in figures 1 to 4, the fabric 4 preferably comprises strips 6 having a flat fabric structure, alternating with strips 7 where the fabric 4 is doubled to form air channels 5. These air channels 5 have, in particular, a width W1 which is comprised between 2 and 10 mm and more preferably between 3 and 8 mm. The strips 6 between the air channels 5 preferably have a width W2 which is comprised between 1 and 10 mm and preferably between 1 and 6 mm. Furthermore, at the location of the air channels or air pockets 5, the fabric 4 has a thickness d which is preferably comprised between 1 and 6 mm and more preferably between 1 and 4 mm. A fabric 4 exhibiting these characteristics is available under the trade name Techwave™. This double fabric has a weight of about 140 g/m², air channels 5 having a width W1 of about 5 mm, flat strips 6 having a width W2 of about 2 mm and a thickness of about 2 mm.

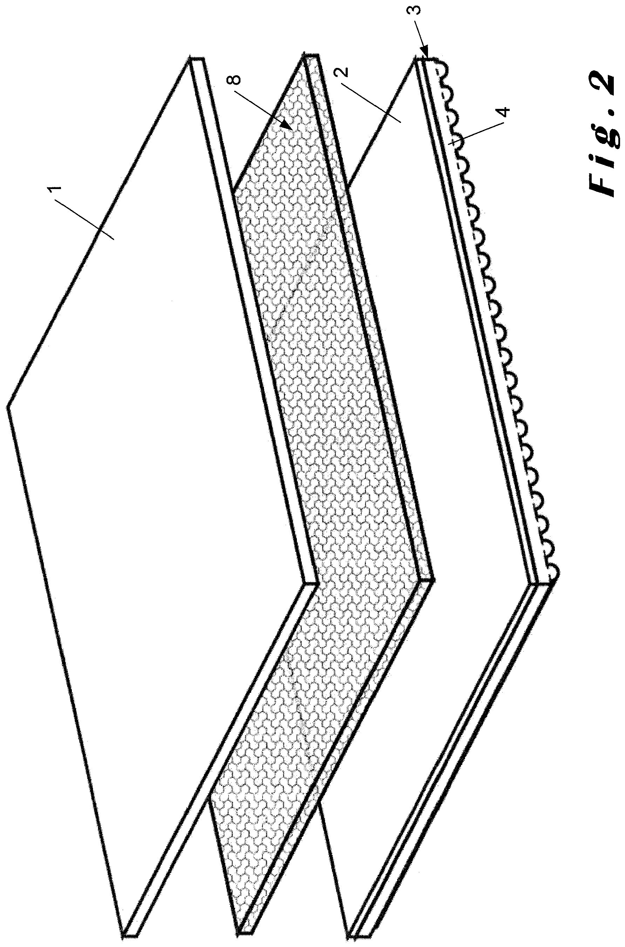

By means of the minimal layer structure shown in figure 1, and using the Techwave™ fabric, protective clothing of level Xf1 Xr1 Y2 Z2 (according to EN 469:2005) can be manufactured. To improve the heat transfer characteristics, an additional thermal barrier 8 can be provided between the outer layer 1 and the breathable, water impermeable film 2, as shown in figure 2. This additional thermal barrier 8 can be manufactured from the materials commonly used for this, in particular from non-woven constructions, woven constructions and knitted fabric constructions. However, a knitted fabric is preferred, as this can offer sufficient addition insulation at a minimal weight, in particular due to the layer of air formed by it between the outer layer 1 and the water impermeable film 2, and as the knitted fabric is not easily damaged or worn by washing the clothing, and furthermore dries relatively quickly. It was found that, e.g., using a knitted fabric having a weight of about 80 to 100 g/m², the level of the protective clothing can already be increased to Xf2 Xr2 Y2 Z2.

An important aspect of the invention consists in providing protective clothing with which contamination of the body can be avoided or limited, in particular while taking off the protective clothing. To this end, the protective clothing is formed by an inner garment and an outer garment, wherein preferably the inner garment is substantially covered by the inner garment.

The inner garment is provided with a fastening to allow it to be put on and taken off independently. This fastening preferably comprises a zipper, in particular arranged at the front of the inner garment. The outer garment is attached to the inner garment so as to allow it to be worn together with the inner garment. More specifically, it is releasably attached to the inner garment by means of attachment means arranged to allow the outer garment to be released from the inner garment, and to be taken off, without needing to undo the fastening of the inner garment. This attachment means preferably comprises at least one further zipper so that the outer garment can be attached to the inner garment in a reliable way. The outer garment itself is preferably arranged in such a way that it cannot be worn without the inner garment. More specifically, it preferably does not comprise a zipper with which it could be fastened by itself.

To ensure that the harmful agents taken up by the protective clothing are maximally removed when taking off the outer garment, said outer garment not only comprises the outer layer 1 but also the breathable, water impermeable film 2 and the thermal barrier 3 attached thereto. Tests have shown that the harmful agents mainly accumulate in the breathable, water impermeable film 2 and that this film 2 forms an effective barrier for these harmful agents, so that the inner garment is not or virtually not contaminated.

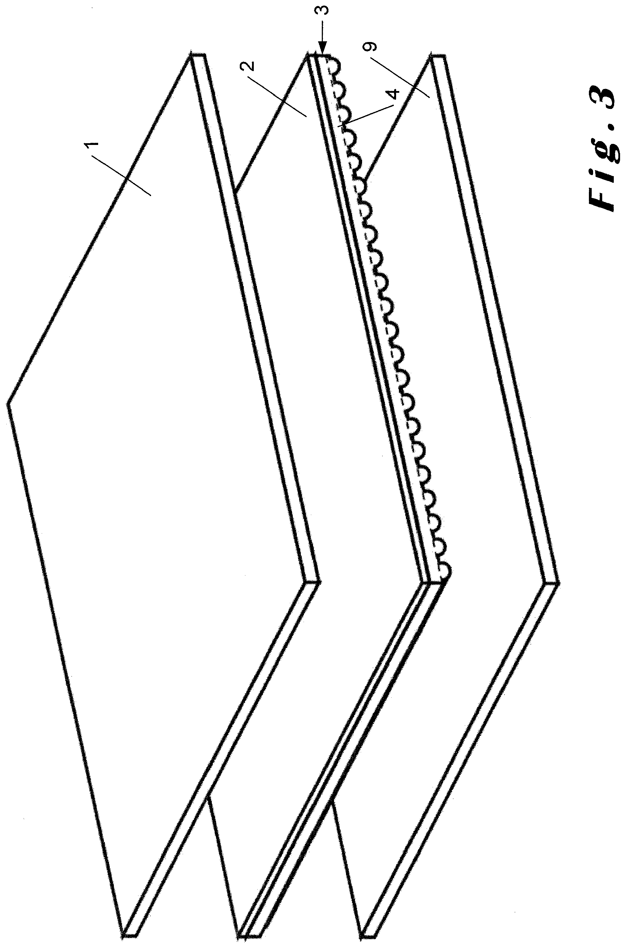

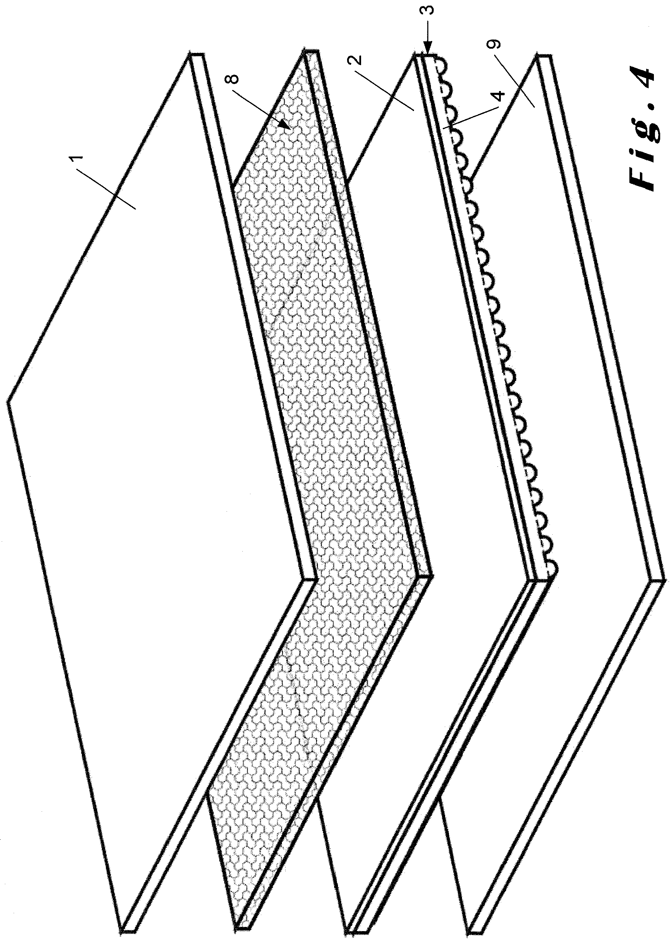

Preferably, the inner garment is formed by a flame-resistant, abrasion-resistant fabric 9. Being abrasion resistant, it can be worn as a separate garment and can be washed. The abrasion-resistant fabric 9, used as an inner garment, can e.g. be combined with an outer garment that can comprise, as shown schematically in figure 3, only the outer layer 1, the breathable, water impermeable film 2 and the thermal barrier 3 attached thereto, or that, as shown schematically in figure 4, further comprises the additional thermal barrier 8. Using the layer structure according to figure 3, it is possible to manufacture protective clothing of level Xf2 Xr2 Y2 Z2, and using the layer structure according to figure 4, it is possible to manufacture protective clothing of level Xf2 Xr2 Y2 Z2. Despite the fact that the clothing is composed of two garments, its weight can be kept sufficiently low so as to prevent physiological/heat stress. This is the case in particular if the fabric 4 to which the breathable, water impermeable film 2 is attached, forms the inside of the outer garment (as illustrated in figures 3 and 4).

The abrasion-resistant fabric 9 is preferably woven so densely that it has a permeability to air, measured according to DIN EN ISO 9237 at a pressure of 100 Pa, which is lower than 150 l/m².sec, and more preferably lower than 100 l/m².sec. The lower the permeability to air of this fabric 9, the smaller the chance that the wearer will be contaminated while taking off the outer garment. In order to increase the abrasion resistance and decrease the permeability to air, the abrasion-resistant fabric 9 preferably has a weight higher than 165 g/m², preferably higher than 175 g/m² and more preferably higher than 185 g/m². As too high a weight should be avoided to avoid physiological/heat stress, the weight of the abrasion-resistant fabric 9 is preferably lower than 230 g/m².

The protective clothing is preferably composed of a jacket and a pair of trousers. Such two-part clothing causes less physiological/heat stress than a one-part overall.

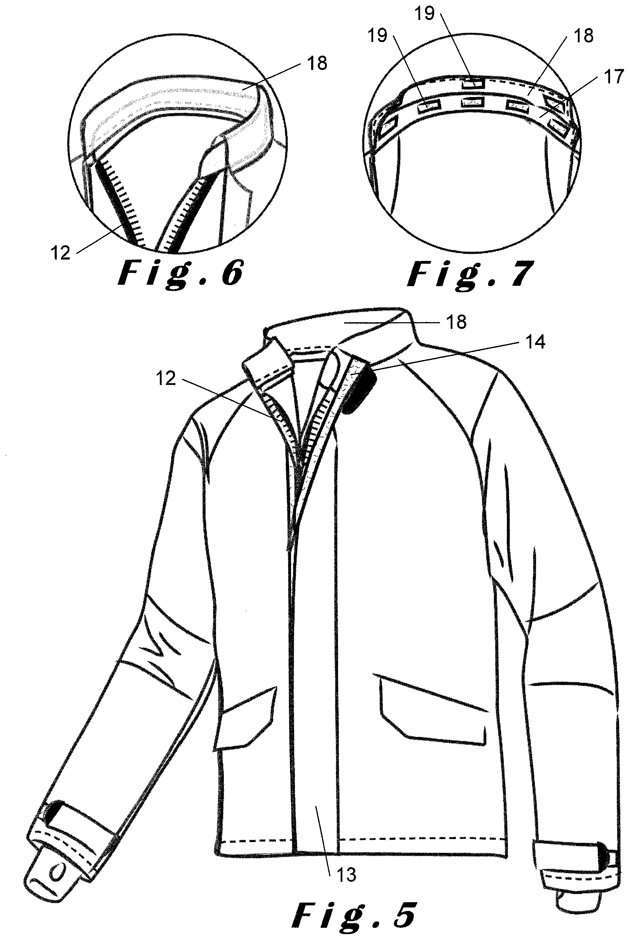

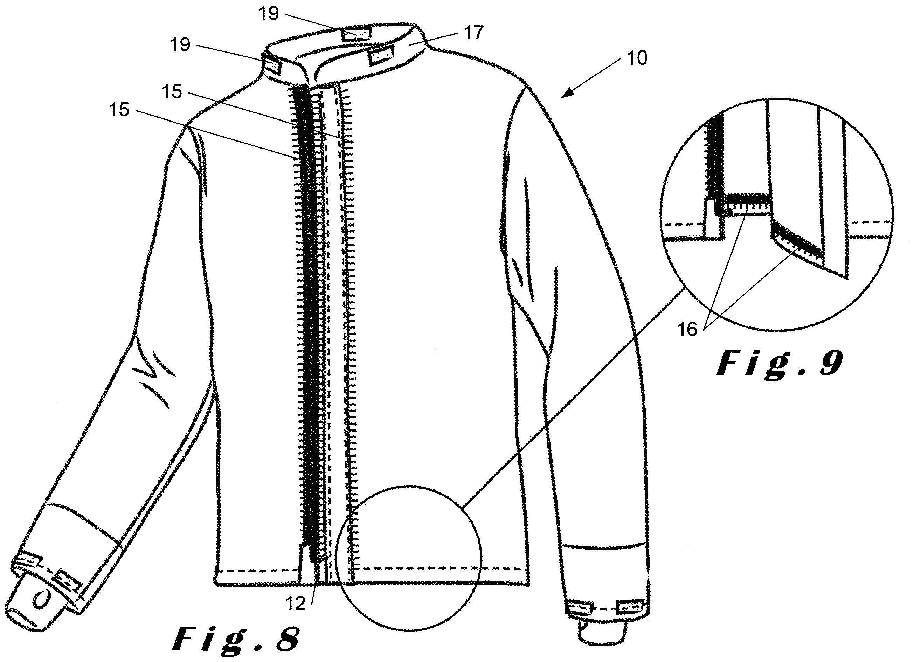

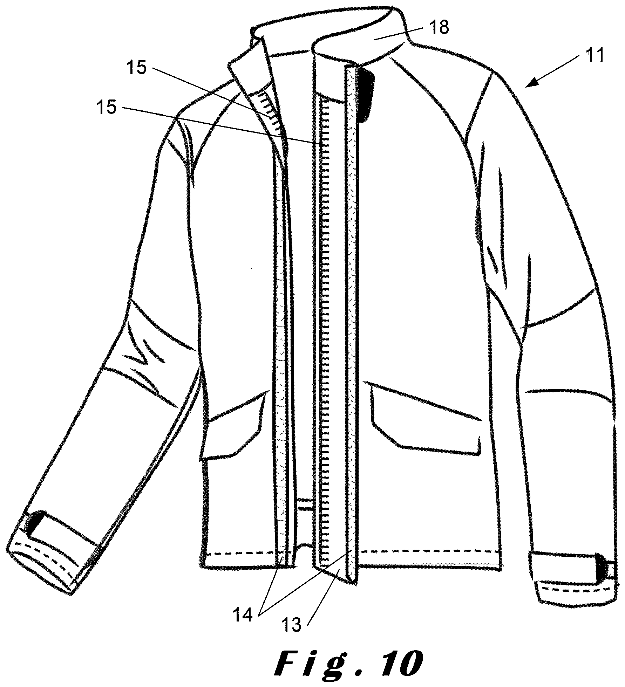

In figures 5 to 10, a jacket according to a preferred embodiment of the invention is shown. The jacket shown in figure 5 consists of an inner jacket 10 (= inner garment), shown in figure 8, and an outer jacket 11 (= outer garment), shown in figure 10.

The jacket is fastened by means of a zipper 12 provided at the front of the inner jacket 10. The outer jacket 11 has a flap 13 at the front, which can be held over the zipper 12 by means of a hook and loop fastener 14. The outer jacket 11 is releasably attached to the inner jacket 10 by means of two further zippers 15 on both sides of the zipper 12. One half of each of these zippers 15 is located on the outside of the inner jacket 10, while the other half of each of these zippers 15 is located on the inside of the outer jacket 11.

The bottom edges of the inner jacket 10 and the outer jacket 11 are releasably attached to each other. To this end, a hook and loop fastener can be used, but a zipper 16 is preferred, as a zipper 16 can seal the space between the inner jacket and the outer jacket in a reliable way. This is important due to the fact that the inner jacket 10 does not contain a breathable, water impermeable film 2, necessitating the prevention of harmful flue gasses penetrating between both jackets. To allow the zipper 16 to be easily undone, said zipper 16 is preferably a quick-release zipper. Such a zipper has a number of places where it can easily be pulled open without requiring the use of the zipper's slider. An example of such a quick-release zipper is the so-called Quickburst™ zipper, marketed by the company YKK.

The two halves of the two further zippers 15 that are provided on the outer jacket 11 preferably do not allow the outer jacket 11 to be fastened by itself, i.e. without being attached to the inner jacket 10. This ensures that the wearer is protected against contamination at all times. Hereto, the two halves can e.g. be made of zippers with a different teeth size, so that they do not fit each other. Alternatively, either both or neither of the two halves can be provided with a slider, so that they cannot cooperate with each other.

To prevent contamination in the region of the collar as much as possible, both the inner jacket 10 and the outer jacket 11 are provided with a collar, being respectively a collar 17 and a further collar 18, wherein the collar 18 of the outer jacket 11 envelops the collar 17 of the inner jacket 10. To keep both collars held against each other, pieces of hook and loop fastener 19 are provided between both collars 17, 18. As the inner collar 17 is fully covered by the outer collar 18, the inner jacket 10 has a clean collar 17 after the outer jacket 11 is taken off.

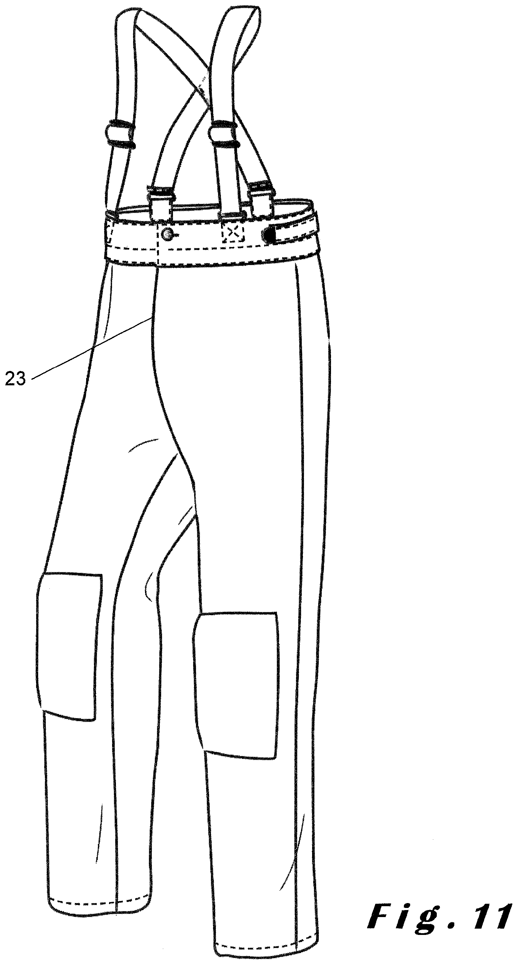

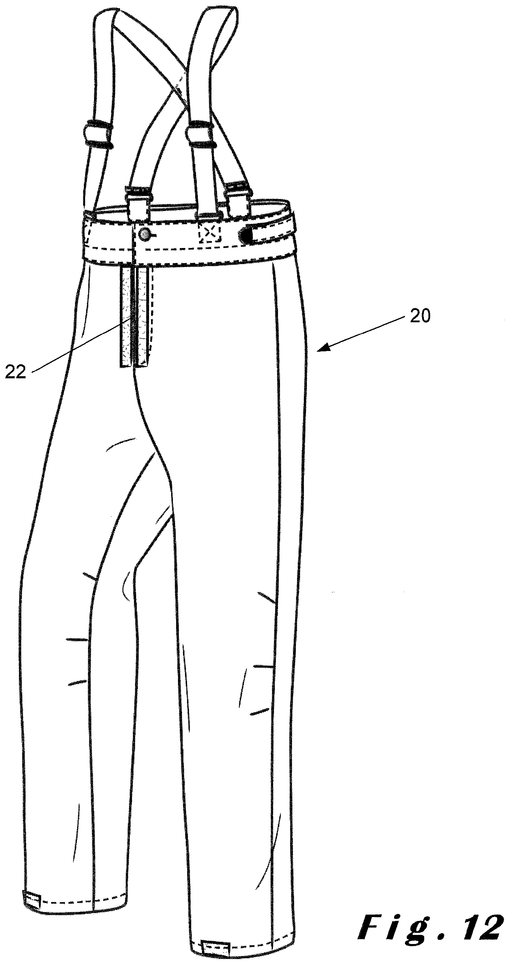

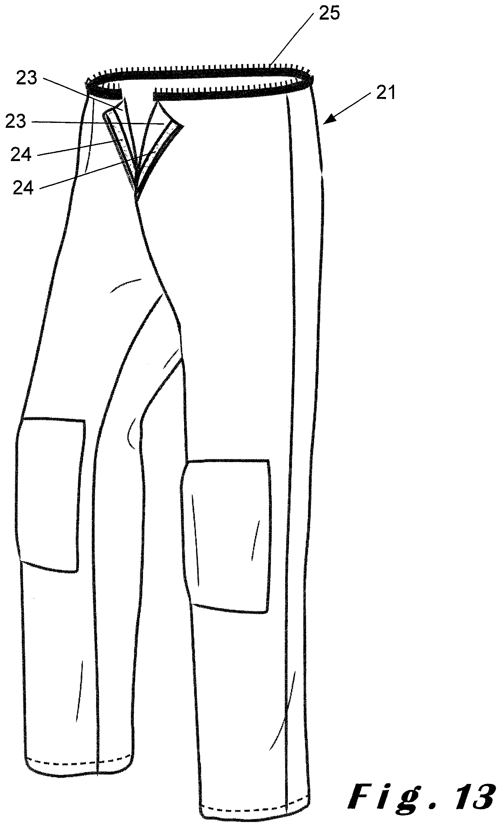

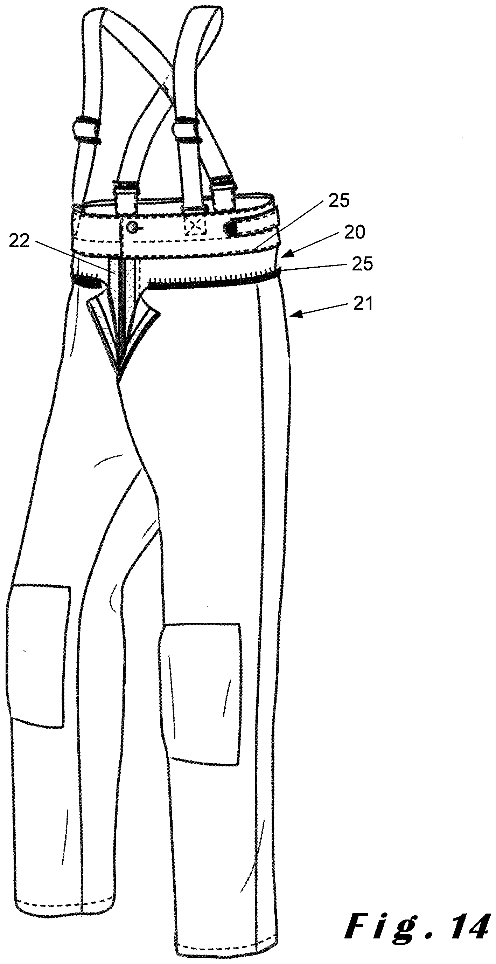

A particular embodiment of the pair of trousers intended to be worn together with the jacket is shown in figures 11 to 14. The pair of trousers shown in figures 11 and 14 consists of an inner pair of trousers 20 (= inner garment), shown in figure 12, and an outer pair of trousers 21 (= outer garment), shown in figure 13.

As shown in figure 14, the pair of trousers is closed by means of a zipper 22 provided at the front on the inner pair of trousers 20. The outer pair of trousers 21 has two flaps 23 at the front, each of which can be attached to the inner pair of trousers 20 by means of a hook and loop fastener 24 along both sides of the zipper 22. The outer pair of trousers 21 is provided with a zipper 25 along its upper edge by means of which it can be zipped onto the inner pair of trousers 20. This zipper 25 is preferably a quick-release zipper. One half of this zipper 25 is located on the outside of the inner pair of trousers 20, while the other half of this zipper 25 is located on the upper edge of the outer pair of trousers 21. The inner pair of trousers 20 protrudes a limited distance above the upper edge of the outer pair of trousers 21. However, this part is not or barely susceptible to contamination, as it is fully covered by the jacket being worn with the pair of trousers. In the region of this protruding part of the inner pair of trousers 20, the material used for the outer pair of trousers 21, and thus containing the outer layer 1, the breathable, water impermeable film 2 and thermal barrier 3 attached thereto, is preferably fixed to the flame-resistant, abrasion-resistant fabric 9 of the inner pair of trousers 20.

Flame-resistant materials and breathable, water impermeable films suitable to be used for manufacturing the protective clothing described above are, in themselves, already on the market, although the breathable, water impermeable film 2 is not yet attached to the thermal barrier 3.

### Outer laver 1

The weights of the outer layers range from 195 g/m² to 240 g/m². The fabric of the outer layer can be based on the following fibres, usually in a mixture of two or more fibres:
meta-aramid (e.g. Nomex®, Conex®,...), para-aramid (e.g. Kevlar®, Twaron®, Technora®, ...), polyamide-imide (e.g. Kermel®), polybenzimidazole (PBI) , polybenzoxazole (PBO), polyphenylene sulphide (PPS), polytetrafluoroethylene (PTFE), polyetherimide, polyetherimide, TLCP fibres (e.g. Vectran®), wool, viscose FR, carbon,

Some examples of common mixtures are:
93% meta-aramid - 5% para-aramid - 2% anti-static fibres
81% meta-aramid - 18% para-aramid - 2% anti-static fibres
75% meta-aramid - 23% para-aramid - 2% anti-static fibres
73.5% meta-aramid - 25% TLCP fibres - 1.5% anti-static fibres
49% meta-aramid - 50% para-aramid - 1 % anti-static fibres
66% polyamide-imide - 32% para-aramid - 2% anti-static fibres
45% polyamide-imide - 45% viscose FR - 10% para-aramid including anti-static fibres
40% polybenzimidazole - 58% para-aramid - 2% anti-static fibres
39% polybenzimidazole - 59% para-aramid - 2% anti-static fibres
36% polybenzimidazole - 62% para-aramid - 2% anti-static fibres
39% polybenzoxazole - 59% para-aramid - 2% anti-static fibres
20% polybenzoxazole - 31.5% meta-aramid - 48.5 % para-aramid including anti-static fibres

### Further thermal barrier 8

This insulation layer can consist of non-woven constructions, woven constructions or knitted fabric constructions, wherein a knitted fabric is preferred, in particular manufactured from aramid. Possible materials to be used for this insulation layer include Meta-aramid (e.g. Nomex®, Conex®...), para-aramid (e.g. Kevlar®, Twaron®, Technora®, ...), polyamide-imide (e.g. Kermel®), polybenzimidazole (PBI), polybenzoxazole (PBO), wool, viscose FR, carbon, Basofil fibres, and/or mixtures of these fibres, as they are usually employed in a mixture (spun in an intimate blend and/or used as fibres)

The weight of this layer is preferably comprised between 50 g/m² and 150 g/m².

### Breathable, water impermeable film 2

This film can be based on various polymers. The most common polymers are polytetrafluoroethylene (PTFE), polyester and polyurethane.

Common materials in the market are films based on:
- expanded (micro porous) polytetrafluoroethylene (PTFE), usually bicomponent films, in other words: a layer of polyurethane on a layer of expanded polytetrafluoroethylene (PTFE);
- two layers of expanded polytetrafluoroethylene (PTFE) with a layer of polyurethane sandwiched in between;
- a polyester film in the form of a compact hydrophilic film;
- a polyurethane film in the form of a compact hydrophilic film;
- a polyurethane film in an expanded form (comprising micro-pores).

### Thermal barrier 3 as a substrate for the film

A possible composition of this fabric is as follows:
89% meta-aramid - 5% para-aramid - 6% polyester

The aramid fibres are wrapped around the polyester fibres, so that the composition can also be given as follows:
67% meta-aramid - 4% para-aramid - 29% of a filament wrapped in aramid fibres

This thermal barrier with air channels has a weight of, for instance, 130 g/m² to 140 g/m².

### Abrasion-resistant fabric 9 of the inner garment

The same materials can be used for this fabric as for the outer layer. Preferably, however, it additionally contains viscose FR to increase the moisture adsorption of the fabric.

The fabric is preferably densely woven so that it forms a low permeability protection against ambient air (and against the toxic agents present therein). Due to its abrasion resistance, it can withstand frequent washing, and the inner garment can also be worn without the outer garment without wearing too quickly.

The fabric preferably has a weight between 165 g/m² and 230 g/m².

Preferred examples are:
- 195 g/m² +/-3% and containing 93% meta-aramid - 5% para-aramid - 2% anti-static fibres and
- 220 g/m² +/- 3% and containing 50% meta-aramid including anti-static fibres - 50% viscose FR.

### Test results

Based on tests carried out on different structures of fire fighter intervention clothing available on the market, it was found that the water impermeable film of the water barrier, in particular, absorbs the most toxic agents. Samples of the different structures were placed in a closed container in which a fire was simulated by burning wood in the container. The backsides of the samples were covered by folding the samples into an envelope of which the sides were sealed with adhesive tape.

| **Structure 1** | | |
|---|---|---|
| Outer layer | PBI™NEO | 20% |
| Thermal layer | TNX Heat Comfort Barrier® | 7% |
| Water barrier | GORE-TEX® Fire Blocker N | 63% |
| Lining | Nomex®/Viscose FR | 9% |
| Total | | 100% |

| **Structure 2** | | |
|---|---|---|
| Outer layer | Nomex® Twin | 10% |
| Water barrier | Sympatex Fire Blocker 2550 | 75% |
| Thermal lining | Iso'Air hydrophobic 100% Nomex® | 14% |
| Lining | 100% Nomex® III | 2% |
| Total | | 100% |

| **Structure 3** | | |
|---|---|---|
| Outer layer | Nomex® Twin | 14% |
| Water barrier | SIO-A.I.R. barrier PTFE | 81% |
| Thermal lining | 100% aramid | 5% |
| Total | | 100% |

| **Structure 4** | | |
|---|---|---|
| Outer layer | Nomex® Microrip | 12% |
| Thermal layer | 100% aramid knitted fabric | 6% |
| Lining with water barrier | Sioliner Plus | 82% |
| Total | | 100% |

The first two structures relate to intervention clothing with a four-layered structure, while the last two structures relate to intervention clothing with a three-layered structure. The water impermeable film is located in a different place in each of the various structures, but always absorbs the greater part of the toxic agents - in percentages, this ranges from 63% to 82%. The outer layer, on the other hand, only absorbs between 10% and 20%, meaning that 80% to 90% of the toxic agents migrate through the outer layer to the other layers of the intervention clothing.

The testing method used for detecting the presence of volatile, semi-volatile (VOC and SVOC) toxic agents and aromatic agents comprised detecting Volatile Organic Components in plastics by means of TD-GC/MS, which is highly suited for quickly determining volatile and semi-volatile organic components. Materials are tested for possible release of volatile, semi-volatile (VOC and SVOC) toxic agents and aromatic agents to ensure the safety of end users.

In a first phase, a thermal extraction is carried out according to the VDA-278 method for 30 minutes at 120°C. During this extraction, the agents are adsorbed onto a Tenax tube - tube with packing material. In a second phase, a thermal desorption is carried out. The thermal desorption system combined with GC-MS offers method-compliant technology for determining (S)VOC collected on absorption tubes (e.g. Tenax) during emission tests.

Test methods for Thermal Desorption: ISO-DIS 16000-6 (TD-GC-MS analysis of material emission).

This technique results in a spectrum of all (semi) volatile agents present on a testing material. Every peak in a graph obtained via the thermal extraction GC-MS method has its own mass spectrum. Using this mass spectrum, it is possible to identify the chemical compound. Some agents with a molecular mass below 200 g/mole are completely evaporated; the values obtained can be used as a measure for the concentration. Agents with a molecular mass above 200 g/mole do not evaporate completely, but their evaporation rate is equivalently proportional to their concentration, so that these values are semiquantitative extraction values.

## Claims

1. Flame-resistant protective clothing having an outside and an inside, said protective clothing comprising, in the direction from the outside to the inside:
- a flame-resistant, abrasion-resistant outer layer (1);
- a breathable, water impermeable film (2); and
- a flame-resistant thermal barrier (3) containing a fabric (4) which is locally doubled to form air pockets (5) between two fabric parts (4', 4"), and having a first, substantially flat side and a second side that is provided with a relief formed by said air pockets (5),
**characterized in that**
the breathable, water impermeable film (2) is attached to the flat side of said fabric (4), wherein said flat side faces the outside of the protective clothing.

2. Flame-resistant protective clothing according to claim 1, **characterized in that** said fabric (4) is woven as a single piece.

3. Flame-resistant protective clothing according to claim 1 or 2, **characterized in that** said fabric (4) contains strips (6) having a flat fabric structure, having between them strips (7) where the fabric (4) is doubled to form air channels (5).

4. Flame-resistant protective clothing according to claim 3, **characterized in that** said air channels (5) have a width (W1) which is comprised between 2 and 10 mm, preferably between 3 and 8 mm, and **in that** said strips (6) preferably have a width (W2) which is comprised between 1 and 10 mm, preferably between 1 and 6 mm.

5. Flame-resistant protective clothing according to any of the claims 1 to 4, **characterized in that** said fabric (4) in the region of said air pockets (5) has a thickness (d) which is comprised between 1 and 6 mm, preferably between 1 and 4 mm.

6. Flame-resistant protective clothing according to any of the claims 1 to 5, **characterized in that** a further flame-resistant thermal barrier (8) is provided between said outer layer (1) and said film (2), in particular containing a knitted fabric.

7. Flame-resistant protective clothing according to any of the claims 1 to 6, **characterized in that** it is formed by an inner garment (10, 20), which is provided with a fastening (12, 22) to allow it to be put on and taken off, and by an outer garment (11, 21), which is attached to the inner garment (10, 20) so as to be worn together with the inner garment (10, 20), said outer garment (11, 21) comprising said outer layer (1), said film (2) and said thermal barrier (3), wherein the outer garment (11, 21) is releasably attached to the inner garment (10, 20) by means of attachment means (15, 25) arranged to allow the outer garment (11, 21) to be released from the inner garment (10, 20) without having to undo said fastening (12, 22) of the inner garment (10, 20).

8. Flame-resistant protective clothing according to claim 7, **characterized in that** said fastening comprises a zipper (12, 22), which is preferably provided at the front of the inner garment (10, 20), and **in that** said attachment means comprises at least one further zipper (15, 25).

9. Flame-resistant protective clothing according to claim 8, **characterized in that** it comprises a jacket, wherein the inner garment comprises an inner jacket (10) and the outer garment comprises an outer jacket (11), wherein said attachment means comprises two further zippers (15), each provided at a different side of said zipper (12).

10. Flame-resistant protective clothing according to claim 9, **characterized in that** the inner jacket (10) comprises a collar (17) and the outer jacket (11) comprises a further collar (18), wherein said further collar (18) envelops the collar (17) of the inner jacket (10) and is preferably attached thereto by means of a hook and loop fastener (19).

11. Flame-resistant protective clothing according to claim 9 or 10, **characterized in that** the inner jacket (10) and the outer jacket (11) have a lower edge along which the space between both jackets (10, 11) is sealed by means of a releasable sealing means, which preferably comprises a quick-release zipper (16).

12. Flame-resistant protective clothing according to claim 8, **characterized in that** it comprises a pair of trousers, wherein the inner garment comprises an inner pair of trousers (20) and the outer garment comprises an outer pair of trousers (21), wherein said further zipper (25) is provided along the upper edge of the outer pair of trousers (20) to zip the outer pair of trousers (21) onto the inner pair of trousers (20).

13. Flame-resistant protective clothing according to any of the claims 7 to 12, **characterized in that** the outer garment (11, 21) essentially fully covers the inner garment (10, 20).

14. Flame-resistant protective clothing according to any of the claims 7 to 13, **characterized in that** the inner garment (10, 20) is formed by a flame-resistant, abrasion-resistant fabric (9).

15. Flame-resistant protective clothing according to claim 14, **characterized in that** said abrasion-resistant fabric (9) has a weight which is higher than 165 g/m², preferably higher than 175 g/m² and more preferably higher than 185 g/m², wherein the weight of said abrasion-resistant fabric (9) is preferably lower than 230 g/m².

16. Flame-resistant protective clothing according to any of the claims 7 to 15, **characterized in that** the fabric (4) of said thermal barrier (3) forms the inside of the outer garment (11, 21).

## Patentansprüche

1. Feuerbeständige Schutzbekleidung, welche eine Außenseite und eine Innenseite hat, wobei die erwähnte Schutzbekleidung, in der Richtung von der Außenseite zur Innenseite, Folgendes umfasst:
- eine feuerbeständige, abriebfeste äußere Schicht (1);
- einen atmungsaktiven, wasserundurchlässigen Belag (2); und
- eine feuerbeständige thermische Sperre (3), welche ein Gewebe (4) enthält, das stellenweise doppelt angebracht ist, um Lufttaschen (5) zwischen zwei Gewebeteilen (4', 4") zu bilden, und welche eine erste, im Wesentlichen flache Seite und eine zweite Seite hat, die mit einem Relief versehen ist, das durch die erwähnten Lufttaschen (5) gebildet ist,
**dadurch gekennzeichnet, dass**
der atmungsaktive, wasserundurchlässige Belag (2) an der flachen Seite des erwähnten Gewebes (4) angebracht ist, wobei die erwähnte flache Seite zur Außenseite der Schutzbekleidung gerichtet ist.

2. Feuerbeständige Schutzbekleidung nach Anspruch 1, **dadurch gekennzeichnet, dass** das erwähnte Gewebe (4) als ein einziges Teil gewebt ist.

3. Feuerbeständige Schutzbekleidung nach Anspruch 1 oder 2, **dadurch gekennzeichnet, dass** das erwähnte Gewebe (4) Streifen (6) mit einer flachen Gewebestruktur enthält, die zwischen einander Streifen (7) haben, wo das Gewebe (4) doppelt angebracht ist, um Luftkanäle (5) zu bilden.

4. Feuerbeständige Schutzbekleidung nach Anspruch 3, **dadurch gekennzeichnet, dass** die erwähnten Luftkanäle (5) eine Breite (W1) haben, die zwischen 2 und 10 mm liegt, bevorzugt zwischen 3 und 8 mm, und dadurch, dass die erwähnten Streifen (6) bevorzugt eine Breite (W2) haben, die zwischen 1 und 10 mm liegt, bevorzugt zwischen 1 und 6 mm.

5. Feuerbeständige Schutzbekleidung nach irgendeinem der Ansprüche 1 bis 4, **dadurch gekennzeichnet, dass** das erwähnte Gewebe (4) im Bereich der erwähnten Lufttaschen (5) eine Dicke (d) hat, die zwischen 1 und 6 mm liegt, bevorzugt zwischen 1 und 4 mm.

6. Feuerbeständige Schutzbekleidung nach irgendeinem der Ansprüche 1 bis 5, **dadurch gekennzeichnet, dass** eine weitere feuerbeständige thermische Sperre (8) zwischen der erwähnten äußeren Schicht (1) und dem erwähnten Belag (2) bereitgestellt ist, welche insbesondere ein Gestrick enthält.

7. Feuerbeständige Schutzbekleidung nach irgendeinem der Ansprüche 1 bis 6, **dadurch gekennzeichnet, dass** es durch ein inneres Kleidungsstück (10, 20), welches mit einem Verschluss (12, 22) versehen ist, damit es angezogen und ausgezogen werden kann, und durch ein äußeres Kleidungsstück (11, 21) gebildet ist, welches am inneren Kleidungsstück (10, 20) befestigt ist, sodass es zusammen mit dem inneren Kleidungsstück (10, 20) getragen wird, wobei das erwähnte äußere Kleidungsstück (11, 21) die erwähnte äußere Schicht (1), den erwähnten Belag (2) und die erwähnte thermische Sperre (3) umfasst, wobei das äußere Kleidungsstück (11, 21) abnehmbar am inneren Kleidungsstück (10, 20) mittels eines Befestigungsmittels (15, 25) befestigt ist, so angeordnet, dass das äußere Kleidungsstück (11, 21) vom inneren Kleidungsstück (10, 20) abgenommen werden kann, ohne den erwähnten Verschluss (12, 22) des inneren Kleidungsstücks (10, 20) öffnen zu müssen.

8. Feuerbeständige Schutzbekleidung nach Anspruch 7, **dadurch gekennzeichnet, dass** der erwähnte Verschluss einen Reißverschluss (12, 22) umfasst, welcher bevorzugt an der Vorderseite des inneren Kleidungsstücks (10, 20) bereitgestellt ist, und dadurch, dass das erwähnte Befestigungsmittel zumindest einen weiteren Reißverschluss (15, 25) umfasst.

9. Feuerbeständige Schutzbekleidung nach Anspruch 8, **dadurch gekennzeichnet, dass** sie eine Jacke umfasst, wobei das innere Kleidungsstück eine innere Jacke (10) umfasst und das äußere Kleidungsstück eine äußere Jacke (11) umfasst, wobei das erwähnte Befestigungsmittel zwei weitere Reißverschlüsse (15) umfasst, jeweils an einer anderen Seite des erwähnten Reißverschlusses (12) bereitgestellt.

10. Feuerbeständige Schutzbekleidung nach Anspruch 9, **dadurch gekennzeichnet, dass** die innere Jacke (10) einen Kragen (17) umfasst und die äußere Jacke (11) einen weiteren Kragen (18) umfasst, wobei der erwähnte weitere Kragen (18) den Kragen (17) der inneren Jacke (10) umhüllt und daran bevorzugt mittels eines Klettverschlusses (19) befestigt ist.

11. Feuerbeständige Schutzbekleidung nach Anspruch 9 oder 10, **dadurch gekennzeichnet, dass** die innere Jacke (10) und die äußere Jacke (11) einen niedrigeren Rand haben, entlang dessen der Raum zwischen den beiden Jacken (10, 11) mittels eines ablösbaren Versiegelungsmittels versiegelt ist, welches bevorzugt einen Schnelltrenn-Reißverschluss (16) umfasst.

12. Feuerbeständige Schutzbekleidung nach Anspruch 8, **dadurch gekennzeichnet, dass** sie eine Hose umfasst, wobei das innere Kleidungsstück eine innere Hose (20) umfasst und das äußere Kleidungsstück eine äußere Hose (21) umfasst, wobei der erwähnte weitere Reißverschluss (25) entlang des oberen Rands der äußeren Hose (20) bereitgestellt ist, um die äußere Hose (21) an der inneren Hose (20) zu befestigen.

13. Feuerbeständige Schutzbekleidung nach irgendeinem der Ansprüche 7 bis 12, **dadurch gekennzeichnet, dass** das äußere Kleidungsstück (11, 21) das innere Kleidungsstück (10, 20) im Wesentlichen völlig bedeckt.

14. Feuerbeständige Schutzbekleidung nach irgendeinem der Ansprüche 7 bis 13, **dadurch gekennzeichnet, dass** das innere Kleidungsstück (10, 20) durch ein feuerbeständiges, abriebfestes Gewebe (9) gebildet ist.

15. Feuerbeständige Schutzbekleidung nach Anspruch 14, **dadurch gekennzeichnet, dass** das erwähnte abriebfeste Gewebe (9) ein Gewicht von mehr als 165 g/m² hat, bevorzugt mehr als 175 g/m² und noch besser mehr als 185 g/m², wobei das Gewicht des erwähnten abriebfesten Gewebes (9) bevorzugt weniger als 230 g/m² beträgt.

16. Feuerbeständige Schutzbekleidung nach irgendeinem der Ansprüche 7 bis 15, **dadurch gekennzeichnet, dass** das Gewebe (4) der erwähnten thermischen Sperre (3) die Innenseite des äußeren Kleidungsstücks (11, 21) bildet.

## Revendications

1. Habillement protecteur ininflammable ayant un extérieur et un intérieur, ledit habillement protecteur comprenant, dans la direction de l'extérieur vers l'intérieur :
- une couche externe résistante à l'abrasion ininflammable (1) ;
- un film imperméable à l'eau respirant (2) ; et
- une barrière thermique ininflammable (3) contenant une étoffe (4) qui est doublée localement pour former des poches d'air (5) entre deux parties d'étoffe (4', 4"), et ayant un premier côté sensiblement plat et un second côté qui est pourvu d'un relief formé par lesdites poches d'air (5),
**caractérisé en ce que**
le film imperméable à l'eau respirant (2) est attaché au côté plat de ladite étoffe (4), dans lequel ledit côté plat fait face à l'extérieur de l'habillement protecteur.

2. Habillement protecteur ininflammable selon la revendication 1, **caractérisé en ce que** ladite étoffe (4) est tissée d'une seule pièce.

3. Habillement protecteur ininflammable selon la revendication 1 ou 2, **caractérisé en ce que** ladite étoffe (4) contient des bandes (6) ayant une structure d'étoffe plate, ayant entre elles des bandes (7) où l'étoffe (4) est doublée pour former des canaux d'air (5).

4. Habillement protecteur ininflammable selon la revendication 3, **caractérisé en ce que** lesdits canaux d'air (5) ont une largeur (W1) qui est comprise entre 2 et 10 mm, de préférence entre 3 et 8 mm, et **en ce que** lesdites bandes (6) ont de préférence une largeur (W2) qui est comprise entre 1 et 10 mm, de préférence entre 1 et 6 mm.

5. Habillement protecteur ininflammable selon l'une quelconque des revendications 1 à 4, **caractérisé en ce que** ladite étoffe (4) dans la région desdites poches d'air (5) a une épaisseur (d) qui est comprise entre 1 et 6 mm, de préférence entre 1 et 4 mm.

6. Habillement protecteur ininflammable selon l'une quelconque des revendications 1 à 5, **caractérisé en ce qu'**une barrière thermique ininflammable supplémentaire (8) est prévue entre ladite couche externe (1) et ledit film (2), contenant en particulier une étoffe tricotée.

7. Habillement protecteur ininflammable selon l'une quelconque des revendications 1 à 6, **caractérisé en ce qu'**il est formé d'un vêtement interne (10, 20), qui est pourvu d'une fixation (12, 22) lui permettant d'être mis et enlevé, et d'un vêtement externe (11, 21), qui est attaché au vêtement interne (10, 20) de façon à être porté conjointement avec le vêtement interne (10, 20), ledit vêtement externe (11, 21) comprenant ladite couche externe (1), ledit film (2) et ladite barrière thermique (3), dans lequel le vêtement externe (11, 21) est attaché de façon libérable au vêtement interne (10, 20) par l'intermédiaire d'un moyen d'attache (15, 25) agencé pour permettre au vêtement externe (11, 21) d'être libéré du vêtement interne (10, 20) sans avoir à défaire ladite fixation (12, 22) du vêtement interne (10, 20).

8. Habillement protecteur ininflammable selon la revendication 7, **caractérisé en ce que** ladite fixation comprend une fermeture éclair (12, 22), qui est de préférence prévue à l'avant du vêtement interne (10, 20), et **en ce que** ledit moyen d'attache comprend au moins une fermeture éclair supplémentaire (15, 25).

9. Habillement protecteur ininflammable selon la revendication 8, **caractérisé en ce qu'**il comprend une veste, dans lequel le vêtement interne comprend une veste interne (10) et le vêtement externe comprend une veste externe (11), dans lequel ledit moyen d'attache comprend deux fermetures éclair supplémentaires (15), prévues chacune d'un côté différent de ladite fermeture éclair (12).

10. Habillement protecteur ininflammable selon la revendication 9, **caractérisé en ce que** la veste interne (10) comprend un col (17) et la veste externe (11) comprend un col supplémentaire (18), dans lequel ledit col supplémentaire (18) enveloppe le col (17) de la veste interne (10) et est de préférence attaché à celui-ci au moyen d'une fixation autoagrippante (19).

11. Habillement protecteur ininflammable selon la revendication 9 ou 10, **caractérisé en ce que** la veste interne (10) et la veste externe (11) ont un bord inférieur le long duquel l'espace entre les deux vestes (10, 11) est étanché par l'intermédiaire d'un moyen d'étanchéité libérable, qui comprend de préférence une fermeture éclair à dégagement rapide (16).

12. Habillement protecteur ininflammable selon la revendication 8, **caractérisé en ce qu'**il comprend un pantalon, dans lequel le vêtement interne comprend un pantalon interne (20) et le vêtement externe comprend un pantalon externe (21), dans lequel ladite fermeture éclair supplémentaire (25) est prévue le long du bord supérieur du pantalon externe (20) pour fermer le pantalon externe (21) sur le pantalon interne (20).

13. Habillement protecteur ininflammable selon l'une quelconque des revendications 7 à 12, **caractérisé en ce que** le vêtement externe (11, 21) couvre essentiellement totalement le vêtement interne (10, 20).

14. Habillement protecteur ininflammable selon l'une quelconque des revendications 7 à 13, **caractérisé en ce que** le vêtement interne (10, 20) est formé d'une étoffe résistant à l'abrasion ininflammable (9).

15. Habillement protecteur ininflammable selon la revendication 14, **caractérisé en ce que** ladite étoffe résistant à l'abrasion (9) a une masse surfacique qui est supérieure à 165 g/m², de préférence supérieure à 175 g/m² et de manière davantage préférée supérieure à 185 g/m², dans lequel la masse surfacique de ladite étoffe résistant à l'abrasion (9) est de préférence inférieure à 230 g/m².

16. Habillement protecteur ininflammable selon l'une quelconque des revendications 7 à 15, **caractérisé en ce que** l'étoffe (4) de ladite barrière thermique (3) forme l'intérieur du vêtement externe (11, 21).
